# EUROPEAN PATENT SPECIFICATION

(11) **EP 2 687 925 B1**
(45) Date of publication and mention of the grant of the patent: **17.10.2018**
(21) Application number: 12005219.6
(22) Date of filing: 16.07.2012
(51) Int. Cl.: G05B 19/00, H04L 12/24, H04L 12/40

(54) **Master intelligent electronic device for high level application**
Intelligente elektronische Master-Vorrichtung für Hochleistungsanwendungen
Dispositif électronique intelligent maître pour application de haut niveau

(43) Date of publication of application: 22.01.2014
(73) Proprietor: ABB Schweiz AG, 5400 Baden (CH)
(72) Inventor: Büker, Horst, 32423 Minden (DE)
(74) Representative: Marks, Frank

(56) References cited:
- WO-A1-2011/101017
- WO-A2-2010/003724
- US-A1- 2010 325 304
- YASHWANT K ET AL: "Modeling an IEC61850 based substation automation system", INDIA CONFERENCE (INDICON), 2011 ANNUAL IEEE, IEEE, 16 December 2011 (2011-12-16), pages 1-5, XP032103190, DOI: 10.1109/INDCON.2011.6139517 ISBN: 978-1-4577-1110-7

## Description

The invention relates to a master-IED (Intelligent Electronic Device) used in high level applications like power management or load shedding applications, whereby the master-IED comprises a MMS- (Manufactures Message Specifications) client and a GOOSE (Generic Object Oriented Substation Events) publisher-subscriber functionality. Furthermore the invention relates to a sub-network system e.g. in power generation facilities or in electric power transformation substations.

### Background of the invention:

In the IEC 61850 specification as an Ethernet-based international standard for communication in power generation facilities and electric power transformation substations to integrate all of the protection, control, measurement and monitoring functions, IED's are specified with MMS server, GOOSE provider and subscriber functionality. In the IEC 61850 specification a GOOSE protocol is scheduled for data exchange among IEDs, also being called horizontal communication or horizontal fast IED-IED communication and is generally based on peer-to-peer communication.

The mechanism GOOSE (Generic Object Oriented Substation Events) describes a control model mechanism in which any format of data, e.g. status, value, are grouped into a data set, transmitted within a short time period and used to ensure specified transmission speed and reliability.

GOOSE data is directly embedded into Ethernet data packets and works on publisher-subscriber mechanism on multicast or broadcast addresses. The GOOSE communication is specified in the IEC 61850 Standard by the International Electrotechnical Commission (IEC).

The IEC61850 GOOSE is an advanced version of the UCA GOOSE. A GOOSE message is used to exchange data between IED's. GOOSE is a mechanism for fast transmission of substation events, such as commands and alarms. A single GOOSE message sent by an IED can be received and used by several receivers. In a common sub-network one device, the sender publishes information, while only the subscriber devices are receiving it. The reaction of each receiver depends on its configuration and functionality.

Furthermore GOOSE is designed as Publisher-Subscriber model and the publisher IED transmit as multicast to all connected subscriber IEDs. Generally, all IEDs that communicate via GOOSE messages have to be combined in one sub-network. The sub-network could be a physical sub-network or via VLAN (virtual LAN) configuration in a logical sub-network, so that important signals like e.g. protection signals can only be transferred between IEDs in the same sub-network.

The Manufacturing Message Specification (MMS) is described in the international standard ISO 9506 and dealing with messaging system for transferring real time process data and supervisory control information between networked devices in a distributed network our automation system.

A MMS protocol is foreseen for a vertical point-to-point communication from the IED's to a SCADA (Supervisory Control and Data Acquisition) OPC server for data access, operation, alarm/event and archive functionality. In the IEC 61850 specification this OPC server interface is specified as Logical Note IHMI (Human Machine Interface or also called SCADA systems) and is used as a group indicator for interfacing and archiving functions.

The OPC server is connected to each IED as a client and has access to all configured IED's report control block where values with quality and time stamp configured. The OPC server is connected to each IED as a client and has access to all configured IED's report control block where values with quality and time stamp configured.

The WO 2010/003724 A2 discloses a system and a method for implementing an electrical process control in a Distributed Control System (DCS). The system is based on integrating Industrial Substation Automation system and the DCS by having a combined control bus conveying process control messages and station bus conveying power control messages. The integrated industrial automation system utilizes a process controller capable of communication using IEC 61850 communication standard interacts with one or more Intelligent Electronic Devices (IEDs) configured for one or more substations in an industrial plant. The method of configuring the process controller of the integrated industrial automation system uses electrical process and plant process engineering tools. The plant process engineering tool has at least one module, present as an integral part of externally for engineering IEC 61850 based application or function for configuring one or more process controllers of the integrated industrial automation system.

### Statement of Problem

All known substation IEDs have only one Ethernet interface, specified according IEC 61850 Edition1, and for the new defined redundancy requirement in IEC 61850 Edition2 a second Ethernet interface with switch functionality inside the IED as high-availability seamless redundancy (HSR) or IEC62439-6 standard compliant redundant ring (DRP) protocol.

IEC 61850 now specifies a network redundancy that fulfills the requirements of substation automation, for the station bus as well as for the process bus. It is based on two complementary protocols defined in the IEC 62439-3 standard: parallel redundancy protocol (PRP) and high-availability seamless redundancy (HSR) protocol. Both are able to overcome the failure of a link or switch with zero switchover time, while allowing clock synchronization according to IEEE 1588 to operate reliably. Developed by ABB in collaboration with other companies, both PRP and HSR will be part of the second edition of the IEC 61850 standard.

For High level applications analog values like voltage and current is needed as input for this task. The actual GOOSE communication between the IED's isn't clear specified and not all IED vendors can support analog values via the GOOSE communication. A general concept for high level application like power management or load shedding isn't possible to realize in the IED's.

### Description of the invention:

This invention provides a new master-IED comprising publisher-subscriber functionality for high level applications e.g. like power management or load shedding applications in power generation facilities or in electric power transformation substations.

The inventive Master-IED comprises at least one communication interface (CI) designed as IED itself and combines a functional combination from an IEC 61850 specified remote control interface (ITCI). In the IEC 61850 specification this Logical Note ITCI represents a remote control or telecontrol interface for connection to higher control functionality. ITCI means group indicator for interfacing and archiving functions (I) and telecontrol and/ or remote control interface (TCI).

It is provided to receive as an MMS client all via report control block configured analog and/or binary values from each IED that is connected with the master-IED. The Master-IED communication interface IED additional supports the GOOSE provider and subscriber functionality to send the calculation results as multicast signal to all connected IEDs for a fast reaction.

### Benefits of the invention

This allows operating all kinds of high level application like e.g. power management and loading shedding. Application results and actions can be transmitted as point-to-point command to each IED separately or via GOOSE communication as multicast to all connected IED's in this sub-network.

In an preferred embodiment a base functionality for signal mapping and an additional modular number of communication interfaces each designed as IED with its own configurable CID-file according IEC 61850 requirement is also provided.

### Brief Description of the Drawings

The subject matter of the invention as well as advantageous refinements and improvements of the invention will be described and explained in more detail using the exemplary embodiments are illustrated in the following drawings, in which:
- Fig. 1: shows an exemplary a master-IED with a communication interface to a sub-network and an additional OPC interface to a SCADA system in a distributed network,
- Fig. 2: shows an exemplary a master-IED of a redundant embodiment for communication interfaces integrated in the master-IED and an additional OPC intertace to a SCADA system in a distributed network, and
- Fig. 3: shows an exemplary sub-network system used in a power generation facilities or in electric power transformation substation with master-IED with a redundant core board and communication interfaces and each master-IED core board has their own OPC server interface in redundant manner to a SCADA system in a distributed network.

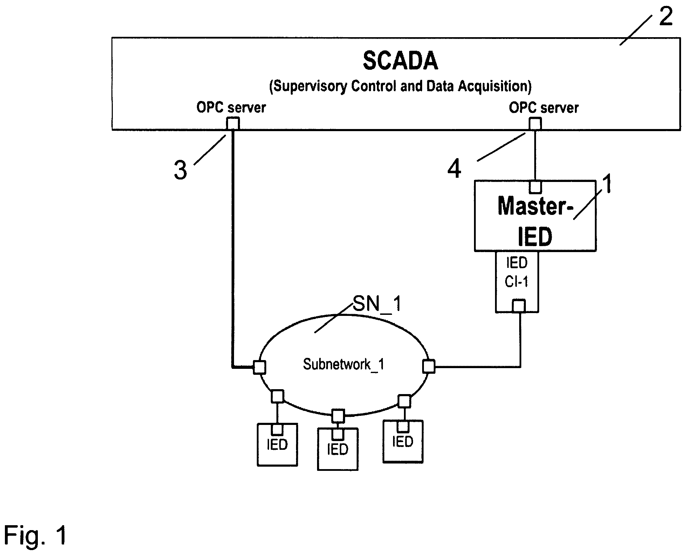

**Figure 1** presents an exemplary part of a distributed network including a master-IED 1 with a communication interface IED CI-1 and an additional OPC interface 4. The master-IED 1 is connected via the communication interface CI-1 to a sub-network SN_1 and via the OPC interface 4 to a SCADA system 2.

The master-IED 1 comprises via the communication interface IED CI-1 a MMS-(Manufactures Message Specifications) client and a GOOSE (Generic Object Oriented Substation Events) publisher-subscriber functionality. By using the new functionality in master-IED 1 it is provided to change a IEC61850 IED specific configuration tool to handle SCD (Substation Configuration Description)- files per communication interface CI-1. A SCD-file is a file describing a complete configured substation in details.

The sub-network SN_1 contains a plurality of IED's and is connected with the OPC-Server 3 of the SCADA system 2. The IEC 61850 compatible communication interface CI-1 of the master-IED 1 is provided to work as a MMS-client and is able to receive all via a report control block configured analog and/or binary values from each IED as a point-to.-point connection. IED's are intelligent electronic devices as automation component for substation automation like controllers in a distributed control system (DCS).

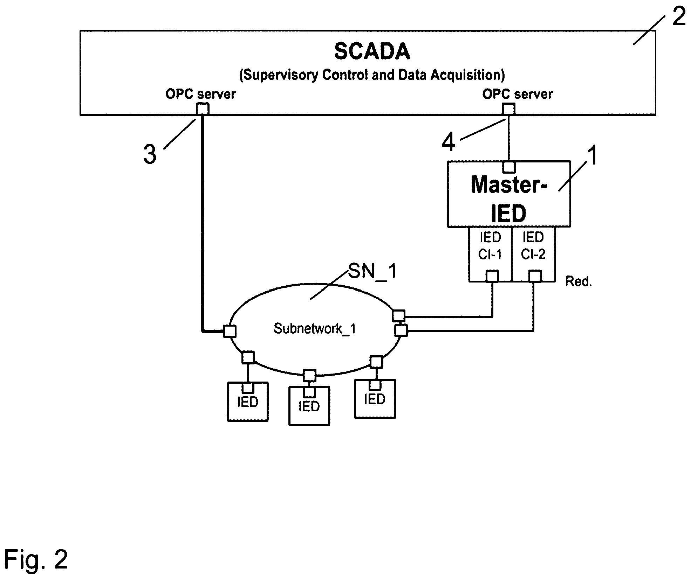

In **figure** 2 is shown an exemplary master-IED 1 with two communication interfaces CI-1, CI-2 integrated in the master-IED 1. The second communication interface CI-2 is the redundant component to the first communications interface CI-1. Each communication interface CI-1, CI-2 is connected to a sub-network SN_1.

For higher availability the master-IED 1 is used in a redundant manner like, a redundant communication interfaces CI-1, CI-2, in which the two communication interfaces IED (CI-1 and CI-2) are configured in the same sub-network as MMS client and GOOSE publisher and/or subscriber.

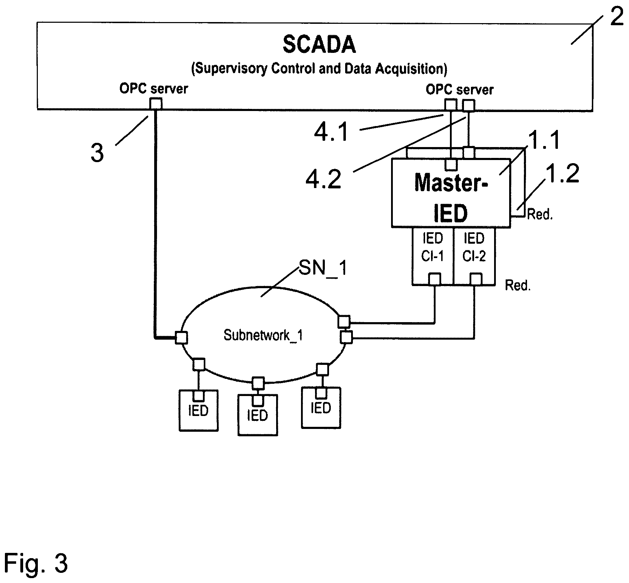

**Figure** 3 presents a further exemplary part of a distributed network also called sub-network system used in a power generation facilities or in electric power transformation substation with master-IED 1.1, 1.2 with a redundant core board and communication interfaces CI-1, CI-2 additional working in redundant configuration including redundant OPC interfaces 4.1, 4.2 to the SCADA system 2 provided for a higher availability.

The new master-IED 1, 1.1, 1.2 comprises communications interfaces CI-1, CI-2 with MMS- (Manufactures Message Specifications) client and a GOOSE (Generic Object Oriented Substation Events) functionality.

As a result the new master-IED 1, 1.1, 1.2 allows such a routing functionality inside the IED. Additionally Ethernet network switches can provide such functionality.

## Claims

1. Master Intelligent Electronic Device, IED, (1) for high level applications e.g. in power management or load shedding applications in power generation facilities or in electric power transformation, comprising an IEC 61850 Manufactoring Message Specification, MMS, client, an IEC 61850 Generic Object Oriented Substation Events, GOOSE, publisher-subscriber functionality for high level applications and at least one communication interface (CI-1, CI-2 ...CI-n),
• wherein each communication interface is designed as IED with its own configurable Configured IED Description, CID-file according IEC 61850 requirement and combines a functional combination from an IEC 61850 specified remote control interface
• wherein the master IED communication interface IED is configured to receive as an MMS client all via report control block configured analog and/or binary values from each IED connected with the master-IED and
• wherein the Master-IED communication interface IED is configured to support the GOOSE provider and subscriber functionality to send calculation results as multicast signal to all connected IEDs for a fast reaction.

2. Master-IED (1) according to claim 1 or 2, wherein a base functionality for signal mapping and an additional modular number of communication interfaces (CI-1, CI-2 ...CI-n) each designed as IED with its own configurable CID-file according IEC 61850 requirement is provided.

3. Master-IED (1) according to claim 1 - 3, wherein it is a functional combination from a remote control interface to receive as an MMS client all via report control block configured analog and/or binary values from each IED that is connected with the master-IED (1).

4. Master-IED (1) according to claim 1 - 4, wherein additional a GOOSE provider and subscriber functionality are supported to send the calculation results as multicast signal to all connected IEDs for a fast reaction.

5. Master-IED (1) according to claim 1 - 5, wherein Application results and actions are transmitted as point-to-point commands to each connected IED separately or via a GOOSE communication as multicast to all connected IED's in a sub-network.

6. Master-IED (1) according to claim 1 - 6, wherein a base functionality for signal mapping and more as one communication interfaces are provided and each of the one communication interfaces is designed as IED with its own configurable CID-file according IEC 61850 requirement.

7. Master-IED (1) according to claim 1 - 7, wherein at least two communication interfaces (CI-1, CI-2) are integrated in the master-IED (1), each communication interface (CI-1, CI-2) is connected to a sub-network (SN_1) and the two communication interfaces (CI-1, CI-2) are configured in the same sub-network (SN_1) as publisher and/or subscriber.

8. Master-IED (1) according to claim 1 - 8, wherein the master-IED (1.1, 1.2) is provided as a redundant core board and communication interfaces CI-1, CI-2 provided for a higher availability.

## Patentansprüche

1. Intelligente elektronische Master-Vorrichtung, Master-IED (Intelligent Electronic Device), (1) für High-Level-Anwendungen, z. B. in Leistungsverwaltungs- oder Lastabwurfanwendungen in Stromerzeugungsanlagen oder bei einer elektrischen Leistungstransformation, welche einen IEC-61850-Manufactoring-Message-Specification- bzw. -MMS-Client, eine IEC-61850-Generic-Object-Oriented-Substation-Events- bzw. GOOSE-Herausgeber-Teilnehmer-Funktionalität für High-Level-Anwendungen und wenigstens eine Kommunikationsschnittstelle (CI-1, CI-2... CI-n) umfasst,
- wobei jede Kommunikationsschnittstelle als IED mit ihrer eigenen konfigurierbaren Configured-IED-Description- bzw. CID-Datei gemäß der IEC-61850-Vorraussetzung gestaltet ist und eine funktionale Kombination einer nach IEC 61850 spezifizierten Fernsteuerungsschnittstelle kombiniert,
- wobei die Master-IED-Kommunikationsschnittstelle-IED dazu konfiguriert ist, Werte von jeder IED, die mit der Master-IED verbunden ist, insgesamt über einen Berichtsteuerblock, der analog und/oder binär konfiguriert ist, als ein MMS-Client zu empfangen, und
- wobei die Master-IED-Kommunikationsschnittstelle-IED dazu konfiguriert ist, die GOOSE-Bereitsteller- und -Teilnehmer-Funktionalität zu unterstützen, um Berechnungsergebnisse als ein Multicast-Signal an alle IEDs für eine schnelle Reaktion zu senden.

2. Master-IED (1) nach Anspruch 1 oder 2, wobei eine Basisfunktionalität für eine Signalzuordnung und eine zusätzliche modulare Anzahl an Kommunikationsschnittstellen (CI-1, CL-2... CI-n), die jeweils als IED mit ihrer eigenen konfigurierbaren CID-Datei gemäß der IEC-61850-Voraussetzung gestaltet sind, bereitgestellt sind.

3. Master-IED (1) nach Anspruch 1-3, wobei sie eine funktionale Kombination von einer Fernsteuerungsschnittstelle zum Empfangen von Werten von jeder IED, die mit der Master-IED (1) verbunden ist, insgesamt über einen Berichtsteuerblock, der analog und/oder binär konfiguriert ist, als ein MMS-Client ist.

4. Master-IED (1) nach Anspruch 1-4, wobei zusätzlich eine GOOSE-Bereitsteller- und -Teilnehmer-Funktionalität unterstützt werden, um die Berechnungsergebnisse als Multicast-Signal an alle verbundenen IEDs für eine schnelle Reaktion zu senden.

5. Master-IED (1) nach Anspruch 1-5, wobei Anwendungsergebnisse und Handlungen als Punkt-zu-Punkt-Befehle an jede verbundene IED getrennt oder über eine GOOSE-Kommunikation an alle verbundenen IEDs in einem Teilnetz als Multicast übertragen werden.

6. Master-IED (1) nach Ansprüchen 1-6, wobei eine Basisfunktionalität zur Signalzuordnung und mehr als eine Kommunikationsschnittstellen bereitgestellt sind und jede der einen Kommunikationsschnittstellen als IED mit ihrer eigenen konfigurierbaren CID-Datei gemäß der IEC-61850-Vorraussetzung gestaltet ist.

7. Master-IED (1) nach Anspruch 1-7, wobei wenigstens zwei Kommunikationsschnittstellen (CI-1, CI-2) in der Master-IED (1) integriert sind, wobei jede Kommunikationsschnittstelle (CI-1, CI-2) mit einem Teilnetz (SN_1) verbunden ist und die zwei Kommunikationsschnittstellen (CI-1, CI-2) in demselben Teilnetz (SN_1) als Herausgeber und/oder Teilnehmer konfiguriert sind.

8. Master-IED (1) nach Anspruch 1-8, wobei die Master-IED (1.1, 1.2) als ein redundantes Kern-Board bereitgestellt ist und Kommunikationsschnittstellen CI-1, CI-2 für eine höhere Verfügbarkeit bereitgestellt sind.

## Revendications

1. Dispositif électronique intelligent principal, IED (Intelligent Electronic Device), (1) pour applications de haut niveau, par exemple dans les applications de gestion de l'alimentation ou de délestage de charge dans les installations de production d'énergie électrique ou de transformation d'énergie électrique, comprenant un client selon la spécification de message de fabrication MMS (Manufacturing Message Spécification) CEI 61850, une fonctionnalité éditeur-abonné d'événements de sous-stations orientés aux objets génériques, GOOSE (Generic Object Oriented Substation Events), CEI 61850, pour des applications de haut niveau et au moins une interface de communication (CI-1, CI-2, ..., CI-n),
• dans lequel chaque interface de communication est conçue comme un IED avec sa propre description de IED configurable, son fichier CID conforme aux exigences de la norme CEI 61850 et unit une combinaison fonctionnelle d'une interface de commande conforme à la spécification CEI 61850
• dans lequel l'interface de communication de l'IED principal IED est configurée pour recevoir en tant que client MMS toutes les valeurs analogiques et/ou binaires configurées par un bloc de contrôle de signalement de chaque IED connecté à l'IED principal et
• dans lequel l'interface de communication IED de l'IED principal est configurée pour prendre en charge la fonctionnalité de fournisseur et d'abonné GOOSE pour envoyer des résultats de calcul sous forme de signal à diffusion multiple à tous les IED connectés pour une réaction rapide.

2. Dispositif électronique intelligent principal (1) selon la revendication 1 ou 2, dans lequel une fonctionnalité de base est fournie pour la cartographie des signaux et un nombre modulaire supplémentaire d'interfaces de communication (CI-1, CI-2, ..., CI-n), chacune conçue comme IED avec son propre fichier CID configurable selon les exigences de la norme CEI 61850.

3. Dispositif électronique intelligent principal (1) selon les revendications 1 à 3, dans lequel on utilise une combinaison fonctionnelle d'une interface de commande à distance pour recevoir en tant que client MMS toutes les valeurs analogiques et/ou binaires configurées par bloc de contrôle avec signalement de chaque IED connecté à l'IED principal (1).

4. Dispositif électronique intelligent principal (1) selon les revendications 1 à 4, dans lequel une fonctionnalité supplémentaire de fournisseur et d'abonné GOOSE est prise en charge pour envoyer les résultats de calcul sous forme de signal à diffusion multiple à tous les IED connectés en vue d'une réaction rapide.

5. Dispositif électronique intelligent principal (1) selon les revendications 1 à 5, dans lequel les résultats et les actions de l'application sont transmis en tant que commandes point à point à chaque IED connecté séparément ou par le biais d'une communication GOOSE sous forme de signal à diffusion multiple vers tous les IED connectés dans un sous-réseau.

6. Dispositif électronique intelligent principal (1) selon les revendications 1 à 6, dans lequel une fonctionnalité de base pour la cartographie des signaux et plus comme une interfaces de communication sont fournies et chacune des une interfaces de communication est conçue en tant qu'IED avec son propre fichier CID configurable selon la norme IEC 61850.

7. Dispositif électronique intelligent principal (1) selon les revendications 1 à 7, dans lequel au moins deux interfaces de communication (CI-1, CI-2) sont intégrées dans l'IED principal (1), chaque interface de communication (CI-1, CI-2) est connectée à un sous-réseau (SN_1) et les deux interfaces de communication (CI-1, CI-2) sont configurées dans le même sous-réseau (SN_1) en tant qu'éditeur et/ou abonné.

8. Dispositif électronique intelligent principal (1) selon les revendications 1 à 8, dans lequel l'IED principal (1.1, 1.2) est fourni sous la forme d'une carte mère redondante et les interfaces de communication CI-1, CI-2 sont fournies de façon à obtenir une disponibilité plus élevée.
